Europäisches Patentamt

European Patent Office

Office européen des brevets

(11) Veröffentlichungsnummer : **0 069 864**
**B1**

(12) **EUROPÄISCHE PATENTSCHRIFT**

(45) Veröffentlichungstag der Patentschrift :
05.03.86

(21) Anmeldenummer : 82105057.2

(22) Anmeldetag : 09.06.82

(51) Int. Cl.⁴ : **H 04 N  5/60**

(54) **Fernseh-Empfänger zur Wiedergabe von Sendungen mit Stereoton.**

(30) Priorität : 27.06.81 DE 3125348

(43) Veröffentlichungstag der Anmeldung :
19.01.83 Patentblatt 83/03

(45) Bekanntmachung des Hinweises auf die Patenterteilung : 05.03.86 Patentblatt 86/10

(84) Benannte Vertragsstaaten :
AT BE CH GB IT LI NL SE

(56) Entgegenhaltungen :
DE-B- 2 902 819
US-A- 3 164 676

(73) Patentinhaber : **Interessengemeinschaft für Rundfunkschutzrechte GmbH Schutzrechtsverwertung &
Co. KG.
Bahnstrasse 62
D-4000 Düsseldorf 1 (DE)**

(72) Erfinder : **Moortgat-Pick, Waldemar, Dr.
Am Alten Tor 11
D-8224 Chieming (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Fernsehempfänger zur Wiedergabe von Sendungen mit Stereoton mit mindestens je einem nach vorn und mindestens je einem seitlich abstrahlenden Lautsprecher und mit Einrichtungen zum Empfang von Stereoton-Sendungen nach dem Zwei-Tonträger-Verfahren, bei welchem auf dem ersten Tonträger das Signal m(L+R) und auf dem zweiten Tonträger das Signal m2R übertragen wird, wobei m ein beliebiger Zahlenfaktor ist, und dessen einem oder mehreren nach vorn abstrahlenden Lautsprecher(n) das in einem ersten Niederfrequenz-Verstärker verstärkte stereophone Summensignal L+R und dessen einem oder mehreren seitlich abstrahlenden Lautsprecher(n) das stereophone Differenzsignal L−R zugeführt sind.

Zur Zeit der Einführung der Stereophonie bei Schallplatte und Rundfunk wurde insbesondere aufnahmeseitig intensiv mit der M/S-Technik experimentiert, bei der M das Summensignal L+R und S das Differenzsignal L−R bildet. Bei diesem Verfahren kommt ein kombiniertes Stereo-Mikrophon zum Einsatz, welches für die Aufnahme der Mittensignale ein Mikrophon mit Nierencharakteristik und für die Aufnahme der Seitensignale ein solches mit ∞-förmiger Charakteristik enthält, die beide am zentralen Aufpunkt vor dem Klangkörper plaziert werden. Diese Technik erlaubt theoretisch eine Signalerfassung mit korrekter stereophoner Auflösung des Gesamtsignals nach Amplitude und Richtung der Einzelsignale. Es besteht theoretisch volle Äquivalenz zur sogenannten A/B-Stereo-Technik, bei der zwei getrennte, im geeignetem Abstand vom dem Klangkörper plazierte Mikrophone zur Aufnahme der Rechts- und Links-Signale verwendet werden.

Wegen der studioseitig unerläßlichen Forderung nach einer nachträglichen Signal-Korrektur zur Hervorhebung von Einzelinstrumenten und Solostimmen wurde die M/S-Technik im Verlauf der Weiterentwicklung der Studiotechnik durch die aus der A/B-Technik abgeleitete Vielkanal-Aufnahme-Technik völlig verdrängt, bei der mit einer Vielzahl von Stützmikrophonen geeigneter Richtcharakteristik eine beliebige Zusammensetzung des Gesamtsignals ermöglicht wird.

Auch wiedergabeseitig kam die M/S-Stereo-Technik praktisch nicht zur Anwendung, obwohl die diesbezüglichen Möglichkeiten in der Literatur ebenfalls aufgezeigt worden sind. Von Beginn der stereophonen Wiedergabetechnik an hat sich der Einsatz von getrennten Lautsprecherboxen für die Wiedergabe der linken und rechten Einzelsignale durchgesetzt, obwohl übertragungsseitig sowohl bei der Schallplatte als auch beim Rundfunk aus Gründen der Kompatibilität zur Mono-Übertragung die Signale M = L+R und S = L−R gebildet und aufgezeichnet bzw. übertragen werden.

Der Verzicht auf eine direkte wiedergabeseitige Auswertung der Signale M und S in der Praxis dürfte u. a. darin begründet sein, daß bei der ausschließlichen Tonwiedergabe von Schallplatte und Rundfunk mit der getrennten Wiedergabe der Links- und Rechts-Signale über separate, in größerem Abstand plazierte Lautsprecher bessere Möglichkeiten bestehen, die Geräte im Wohnraum unterzubringen, als bei einer konzentrierten Anordnung aller Geräte, wie es für die Anwendung einer wiedergabeseitigen M/S-Technik erforderlich sein würde.

Mit der Einführung des Stereo-Tones beim Fernsehen ergaben sich nun insofern andere diesbezügliche Verhältnisse, weil das Fernsehbild infolge seiner begrenzten Flächenausdehnung auch für den Fall eines stereophonen Begleittons eine auf das Bildgeschehen eindeutig bezogene Tonwiedergabe erfordert.

Diese Forderung läßt sich mit vom Empfänger getrennt angeordneten Lautsprechern kaum optimal erfüllen, da bei einem von der Hi-Fi-Stereo-Technik her üblichen Lautsprecherabstand von ca. 4 m die Kongruenz von Bild- und Tongeschehen so gut wie vollständig verloren geht. Bei sehr kleinem Lautsprecherabstand wird andererseits in A/B-Stereo-Technik die räumliche Transparenz der Wiedergabe, die man gerade anstrebt, wesentlich reduziert.

Aus der US-PS-3 164 676 ist ein stereophones Wiedergabesystem in M/S-Technik bekannt, bei welchem vom Mittenlautsprecher das Summensignal A+B, das dem Signal L+R entspricht, und von dem Seitenlautsprechern die Differenzsignale A−B bzw. −(A−B), gleichbedeutend mit L−R bzw. R−L, abgestrahlt werden. Hierbei ist der Schaltungsaufwand, insbesondere bei den notwendigen Verstärkungsstufen, sehr hoch, und es stellt sich die Aufgabe, den Schaltungsaufwand entscheidend zu verringern. Diese Aufgabe wird durch die im Kennzeichen des Patentanspruchs 1 gegebene Lehre gelöst.

Bei der vorliegenden Kodierung der Stereo-Signale auf den beiden Tonträgern wird auf die Rückbildung des linken (L) und rechten (R) Einzelsignals ganz verzichtet und das gewünschte Differenzsignal L−R unmittelbar aus den beiden an den Demodulatorausgängen verfügbaren Signalen als Differenz in einfacher Weise gewonnen. Das ist sehr rationell und im übrigen auch unkritisch hinsichtlich des Abgleichs. Eine Balance-Regelung kann entfallen.

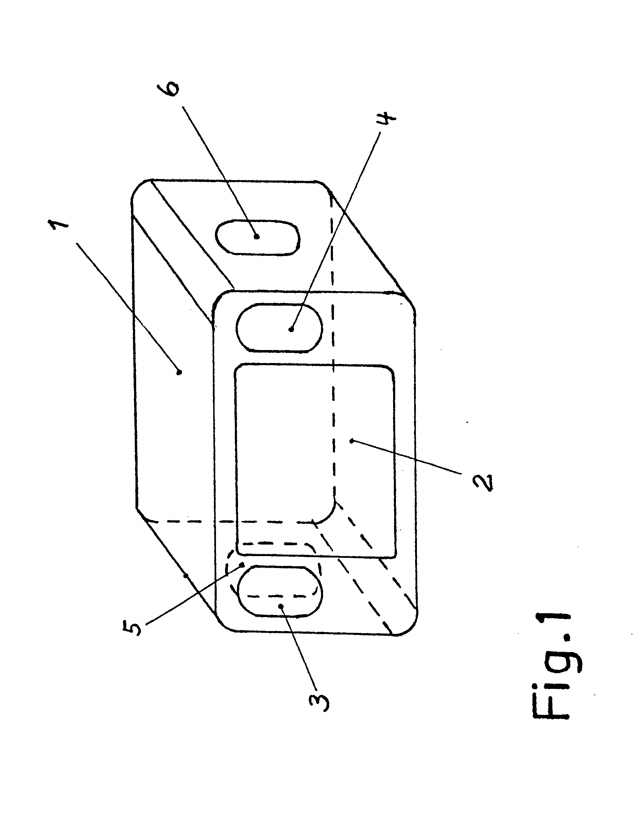

Fig. 1 zeigt ein Beispiel für den Aufbau des erfindungsgemäßen Fernseh-Empfängers 1 mit dem Bildrohr 2, den Frontlautsprechern 3 und 4, sowie den Seitenlautsprechern 5 und 6.

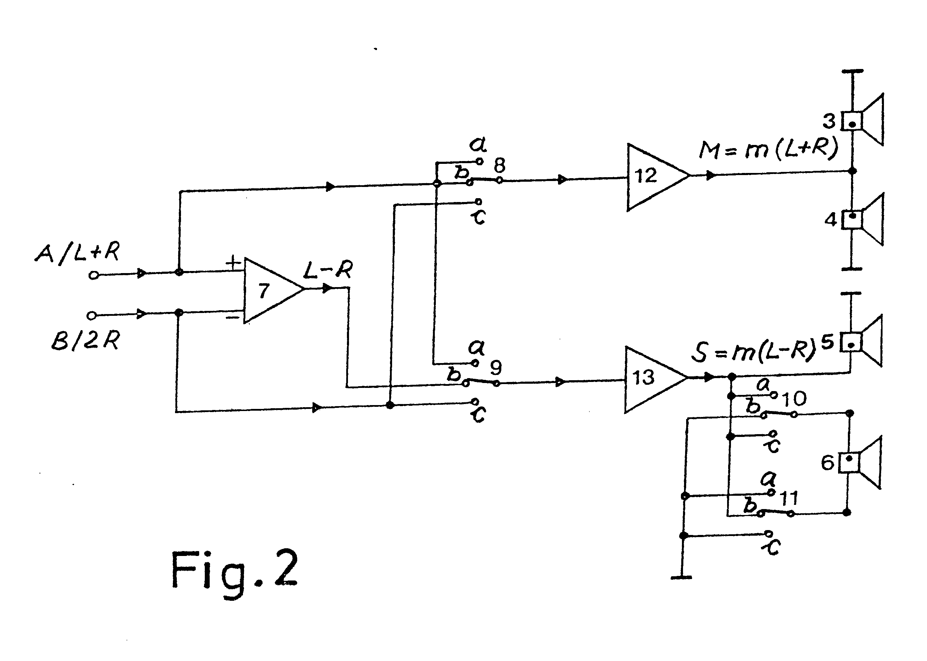

In Fig. 2 ist ein Blockschaltbild der erfindungsgemäßen Anordnung ausgeführt.

Die von den Demodulatoren gelieferten Signale L+R und 2R werden dem Differenzverstärker 7, sowie direkt den Eingangswahlschaltern 8 und 9 zugeführt. In Stellung b für Stereo-Wiedergabe gelangt das Summensignal L+R vom Schalter 8 zum Eingang des ersten NF-Verstärkers 12, welcher das verstärkte Signal M = m(L+R) den Frontlautsprechern 3 und 4 zuleitet.

In der Schaltstellung b gelangt das Differenzsignal L−R vom Wahlschalter 9 zum Eingang des zweiten NF-Verstärkers 13, der die Lautsprecher 5 und 6 mit dem verstärkten Differenzsignal S = m(L−R) gegenphasig versorgt.

In den Schaltstellungen a bzw. c der Umschalter 8 und 9 erhält auch der zweite NF-Verstärker 13 eingangsseitig jeweils das gleiche Signal wie der erste NF-Verstärker 12.

Diese beiden Betriebsstellungen gelten für die Mono-Wiedergabe, wenn die Demodulatoren getrennte zweisprachige Mono-Signale A bzw. B liefern. Mit den Umschaltern 10 und 11 wird der Lautsprecher 6 dann auf gleichphasigen Betrieb umgeschaltet.

### Patentansprüche

1. Fernseh-Empfänger (1) zur Wiedergabe von Sendungen mit Stereoton mit mindestens je einem nach vorn (3, 4) und mindestens je einem seitlich (5, 6) abstrahlenden Lautsprecher und mit Einrichtungen zum Empfang von Stereoton-Sendungen nach dem Zwei-Tonträger-Verfahren, bei welchem auf dem ersten Tonträger das Signal m(L+R) und auf dem zweiten Tonträger das Signal m2R übertragen wird, wobei m ein beliebiger Zahlenfaktor ist, und dessen einem oder mehreren nach vorn abstrahlenden Lautsprecher(n) (3, 4) das in einem ersten Niederfrequenz-Verstärker (12) verstärkte stereophone Summensignal L+R und dessen einem oder mehreren seitlich abstrahlenden Lautsprecher(n) (5, 6) das stereophone Differenzsignal L−R zugeführt sind, dadurch gekennzeichnet, daß im Empfänger ein einziger Differenzverstärker (7) vorgesehen ist, mit Hilfe dessen ein Differenzsignal m(L+R) − m2R = m(L−R) gewonnen wird, welches einem zweiten Niederfrequenz-Verstärker (13) zugeführt ist, und daß der bzw. die seitlich abstrahlende(n) Lautsprecher (5, 6), welche(r) mit dem Differenzsignal m(L−R) gespeist ist bzw. sind, in den Seitenwänden des Empfängergehäuses angeordnet ist bzw. sind.

2. Fernseh-Empfänger (1) nach Anspruch 1 mit mindestens je einem seitlich abstrahlenden Lautsprecher (5, 6) dadurch gekennzeichnet, daß die seitlich abstrahlenden Lautsprecher (5, 6) an den Seitenwänden des Empfangsgehäuses getrennt angeordnet sind.

### Claims

1. A television receiver (1) for the reproduction of transmission with stereo sound, having at least one loudspeaker (3, 4) radiating forwards and at least one loudspeaker (5, 6) radiating sideways and having devices for the reception of stereo sound transmission by the two sound-carriers method, wherein the signal m(L+R) is transmitted on the first sound carrier and the signal m2R is transmitted on the second sound carrier, m being any numerical factor, and the stereophonic sum signal L+R, amplified in a first low-frequency amplifier (12), is fed to its one or more loudspeaker(s) (3, 4) radiating forwards and the stereophonic difference signal L−R is fed to its one or more loudspeaker(s) (5, 6) radiating sideways, characterised in that a single differential amplifier (7) is provided in the receiver, by means of which amplifier a difference signal m(L+R) − m2R = m(L−R) is obtained which is fed to a second low-frequency amplifier (13), and that the loudspeaker(s) (5, 6) radiating sideways, which is or are fed with the difference signal m(L−R), is or are disposed in the side walls of the receiver housing.

2. A television receiver (1) as claimed in claim 1, having at least one loudspeaker (5, 6) radiating sideways, characterised in that the loudspeakers (5, 6) radiating sideways are disposed separately on the side walls of the receiver housing.

### Revendications

1. Récepteur de télévision (1) pour la reproduction d'émissions avec son stéréophonique, avec au moins un haut-parleur rayonnant vers l'avant (3, 4) et au moins un haut-parleur rayonnant latéralement (5, 6) et avec des dispositifs pour la réception d'émissions à son stéréophonique suivant le procédé à deux porteuses, dans lequel sur la première porteuse est transmis le signal m(L+R) et sur la seconde porteuse le signal m2R, m étant un facteur numérique quelconque, et dont un ou plusieurs haut-parleurs (3, 4) rayonnant vers l'avant reçoivent le signal de somme stéréophonique L+R amplifié dans un premier amplificateur basse-fréquence (12) et dont un ou plusieurs haut-parleurs (5, 6) rayonnant latéralement reçoivent le signal de différence stéréophonique L−R, caractérisé en ce que dans le récepteur est prévu un seul amplificateur différentiel (7), à l'aide duquel est obtenu un signal de différence m(L+R) − m2R = m(L−R), qui est appliqué à un second amplificateur basse-fréquence (13), et en ce que le ou les haut-parleurs (5, 6) rayonnant latéralement, qui sont alimentés avec le signal de différence m(L−R), sont disposés dans les parois latérales du boîtier du récepteur.

2. Récepteur de télévision (1) suivant la revendication 1 avec au moins un haut-parleur rayonnant latéralement (5, 6), caractérisé en ce que les haut-parleurs rayonnant latéralement (5, 6) sont disposés séparément sur les parois latérales du boîtier du récepteur.

Fig.1

Fig.2

0 069 864